# FASCICULE DE BREVET EUROPEEN

(11) **EP 2 150 438 B1**
(45) Date de publication et mention de la délivrance du brevet: **23.03.2011**
(21) Numéro de dépôt: 08805891.2
(22) Date de dépôt: 29.05.2008
(51) Int. Cl.: B60R 13/02

(54) **AGENCEMENT D'UNE GARNITURE DE PORTE COMPORTANT DES MOYENS DE FIXATION PERFECTIONNES**
ANORDNUNG FÜR EINEN TÜRRAHMEN MIT ERWEITERTEN ANBRINGUNGSMITTELN
ARRANGEMENT FOR A DOOR FITTING INCLUDING ADVANCED ATTACHMENT MEANS

(30) Priorité: 01.06.2007 FR 0755413
(43) Date de publication de la demande: 10.02.2010
(73) Titulaire: Renault S.A.S., 92100 Boulogne-Billancourt (FR); Guerlin, Philippe, 60 Rue Leconte De Lisle 91540 Mennecy (FR)
(72) Inventeur: GUERLIN, Philippe, F-91540 Mennecy (FR); BOUILLON, Jean Charles, F-78940 La Queue Lez Yvelines (FR)
(86) Numéro de dépôt international: PCT/FR2008/050948
(87) Numéro de publication internationale: WO 2008/152312

(56) Documents cités:
- DE-A1-102004 023 396
- DE-A1-102005 018 833
- US-A- 3 354 584

## Description

L'invention concerne un agencement d'une garniture sur un panneau latéral de caisse de véhicule automobile, dans lequel la garniture présente une paroi sensiblement longitudinale s'étendant en regard du panneau et un retour transversal s'étendant, en direction du panneau, sensiblement perpendiculairement au plan dudit panneau.

Une garniture de panneau latéral de caisse doit présenter des moyens de fixation permettant son maintien correct sur le panneau non seulement lors d'un usage normal mais aussi en cas de choc latéral, afin d'éviter, par exemple, un détachement intempestif de la garniture ou une trajectoire de sortie incontrôlée d'un coussin gonflable de sécurité se déployant entre un passager du véhicule et ladite garniture.

Il est connu d'utiliser des moyens de fixation d'une garniture sur un panneau de porte, constitués par un trou ménagé dans le retour transversal de la garniture et une patte transversale, portée par le panneau et sensiblement parallèle au retour de la garniture, comportant un orifice et un fût de vissage, ledit trou, ledit orifice et ledit fût étant destinés à recevoir une vis de fixation. Même si ce dispositif est simple et efficace, il présente l'inconvénient d'être très peu esthétique car la tête de la vis est visible sur le retour de la garniture. De plus, la tête de vis, en dépassant de la surface du retour de la garniture, nécessite de prévoir un jeu supplémentaire par rapport aux pièces d'habillage environnantes telles que celle du pied milieu, par exemple.

DE 10 2005 018833 A1 décrit un agancement d'une garniture sur un panneau latéral selon le préambule de revendication 1. Selon un autre dispositif de fixation de garniture de porte connu, le retour transversal de la garniture comporte un rebord s'étendant sensiblement vers l'extérieur et parallèlement au plan de la porte. Le rebord, appliqué contre le panneau, comporte un orifice apte à recevoir un élément de clippage coopérant avec un autre orifice en vis-à-vis ménagé dans le panneau. Même si ce dispositif permet que la fixation soit invisible lorsque la porte est fermée, il présente l'inconvénient d'être encombrant car il nécessite un espace important autour de la garniture. En outre, il est nécessaire de prévoir un système d'étanchéité spécifique autour des portes, en raison de la présence du rebord de fixation et des clips.

Afin de pallier ces inconvénients, l'invention a pour objet un agencement de garniture de panneau latéral de caisse dans lequel les moyens de fixation ne sont pas visibles tout en étant efficaces.

L'invention a aussi pour objet un agencement simple, peu encombrant et peu coûteux.

A cet effet, l'invention propose un agencement d'une garniture sur une porte de véhicule automobile du type cité ci-dessus, caractérisé en ce que l'agencement comporte
- des moyens de fixation internes constitués par une première patte de fixation d'orientation sensiblement perpendiculaire au plan du panneau, portée par une face interne de la paroi longitudinale de la garniture et traversée par un premier trou, et par une deuxième patte de fixation, d'orientation sensiblement perpendiculaire au plan du panneau, portée par le panneau et traversée par un deuxième trou, portant un fût de vissage, les deux pattes étant reliées entre elles par une vis coopérant avec les premier et deuxième trous,
- et une zone d'accès aux moyens de fixation internes ménagée, en regard desdits trous, dans le retour de la garniture, et fermée par un obturateur.

Selon d'autres caractéristiques de l'invention:
- La première patte forme une partie d'un renfort interne de la garniture.
- La paroi longitudinale de la garniture est formée d'une zone périphérique et d'une partie centrale de support d'un élément d'habillage central, un bord de la partie centrale étant relié à la face interne de la zone périphérique et en ce que la première patte de fixation est constituée par une extension du bord de la partie centrale.
- La première patte comporte une collerette s'étendant au moins sur une portion inférieure de la périphérie du premier trou, en direction du retour, de manière à éviter, lors du montage de la garniture, une chute de la vis à l'intérieur de ladite garniture.

- L'obturateur coopère avec un évidement ménagé dans le retour de manière que l'obturateur et le retour présentent une surface sensiblement plane.
- La surface de l'obturateur et celle du retour sont identiques de manière qu'ils présentent un aspect homogène.
- Le panneau latéral de caisse est une porte.

D'autres caractéristiques et avantages de l'invention apparaîtront à la lecture de la description d'exemples de réalisation d'un agencement d'une garniture sur une porte de véhicule automobile en référence aux dessins annexés dans lesquels :
- La figure 1 est une vue de dessus schématique d'un véhicule comportant l'agencement d'une garniture de panneau latéral de caisse selon l'invention, l'avant se trouvant à droite et l'arrière à gauche.
- La figure 2 est une vue en coupe de dessus de l'agencement de garniture de la figure 1.
- La figure 3 est une vue arrière de l'agencement de la figure 1.

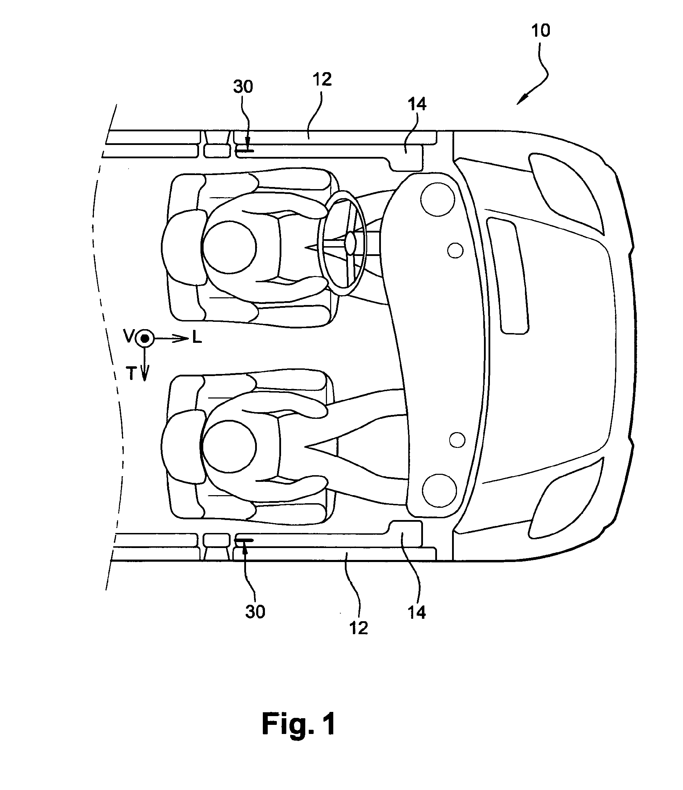

Dans la description qui suit, nous prendrons à titre non limitatif une orientation longitudinale, verticale et transversale indiquée par le trièdre L,V,T des figures 1 à 3.

Des éléments identiques ou analogues sont désignés par les mêmes chiffres de référence.

A l'exception des éléments spécifiques du poste de conduite, le véhicule présente une symétrie générale par rapport à un plan longitudinal médian.

Tel que représenté à la figure 1, un véhicule 10 comporte des panneaux de caisse latéraux 12, qui sont dans le cas décrit ici des panneaux de portes. Cependant, dans le cas, par exemple, d'un véhicule à trois portes (non décrit ici), les panneaux latéraux peuvent être des portes avant et des panneaux arrière latéraux.

Des éléments de garniture 14 sont agencés sur les panneaux de portes 12 et sont fixés par l'intermédiaire d'au moins un moyen de fixation 30, situé ici sur une partie arrière des éléments de garniture 14.

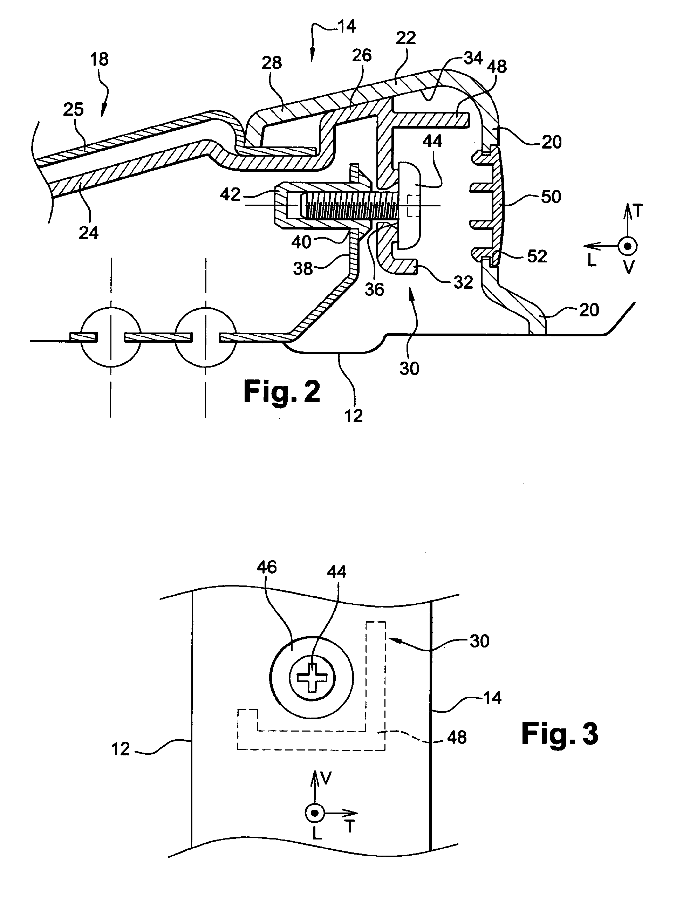

Tel que représenté à la figure 2, l'élément de garniture 14 comporte une paroi d'orientation sensiblement longitudinale 18, s'étendant en regard du panneau de porte 12 et prolongée par un retour transversal 20 s'étendant selon une direction sensiblement perpendiculaire au plan du panneau de porte 12. Le retour 20 se trouve ici à l'arrière du panneau de porte 12.

Le retour 20 peut être en appui contre le panneau de porte 12 ou bien laisser subsister un jeu de montage entre ledit retour 20 et ledit panneau de porte 12.

La paroi longitudinale 18 de la garniture 14 comporte ici une zone périphérique 22 et une partie centrale 24 de support d'un élément d'habillage 25. Un bord 26 de la partie centrale 24 est inséré sous un bord 28 de la zone périphérique 22 et fixé par soudure à ladite zone périphérique 22. Le bord 26 de la partie centrale 24 peut ainsi former dans la zone de soudure une partie de renfort.

La garniture 14 est fixée sur le panneau de porte 12 par des moyens de fixation internes 30, invisibles depuis l'extérieur de la garniture 14.

Les moyens de fixation 30 comportent une première patte de fixation 32, portée par une face interne 34 de la paroi longitudinale 18 de la garniture. La première patte 32, qui s'étend, en direction dudit panneau de porte 12, dans un plan sensiblement transversal, c'est-à-dire sensiblement perpendiculaire au plan du panneau de porte 12, comporte un premier trou 36.

Ladite première patte de fixation 32 est, dans le cas décrit ici, une extension du bord 26 de la partie centrale 24 de la paroi longitudinale 18, ce qui présente l'avantage d'éviter d'utiliser une pièce supplémentaire.

Les moyens de fixation 30 comportent aussi une deuxième patte de fixation 38 portée par le panneau de porte 12. La deuxième patte de fixation 38 peut être fixée par rivetage sur le panneau de porte 12.

Ladite deuxième patte de fixation 38, qui s'étend, en direction de la paroi longitudinale 18 de la garniture 14, dans un plan transversal, c'est-à-dire selon une orientation sensiblement perpendiculaire au panneau de porte 12, comporte un deuxième trou 40.

Les pattes de fixation 32 et 38 s'étendent le long l'une de l'autre de manière que les trous 36 et 40 soient en regard l'un de l'autre. Le deuxième trou 40 comporte en outre un fût de vissage 42, qui peut être rapporté, de manière que les trous 36 et 40 puissent accueillir une vis de fixation 44. Un jeu relatif selon la direction verticale est possible grâce à la forme du fût de vissage 42 qui présente une section allongée et taraudée.

Par ailleurs, le retour 20 de la garniture 14 est relié au panneau de porte 12 par des moyens de fixation (non représentés), tels que des agrafes, par exemple, indépendants du moyen de fixation 30.

La finition selon une direction transversale entre le retour 20 et le panneau de porte 12 étant réglée indépendamment du moyen de fixation 30, des déformations locales peuvent être engendrées, car le retour 20 peut être voilé selon une direction longitudinale, l'isostatisme de la garniture 14 étant situé à distance du moyen de fixation 30. Cependant, la patte 32 peut bouger lors du vissage de la vis 44 de façon à compenser le jeu de montage entre ladite patte 32 et le fût de vissage 42. Toutes ces déformations étant à l'intérieur de la garniture 14, elles se trouvent ainsi cachées.

Par ailleurs, il est prévu une zone d'accès 46 pour le montage de la vis 44 dans les pattes de fixation 32 et 38. La zone d'accès 46 est un orifice ménagé dans le retour 20, dans le prolongement des trous 36 et 40.

Tel que représenté aux figures 2 et 3, afin d'éviter que la vis de fixation 44 ne tombe à l'intérieur de la garniture 14 lors du montage, il est prévu une collerette 48 à la périphérie du premier trou 40. La collerette 48 s'étend en direction du retour 20.

Comme représenté à la figure 3, la collerette 48 peut ne s'étendre que sur une portion inférieure de la périphérie du premier trou 40.

Après vissage de la vis 44, la zone d'accès 46 est bouchée par un obturateur 50, de façon à dissimuler l'intérieur de la garniture 14 et plus particulièrement les moyens de fixation interne. L'obturateur 50 peut être fixé par des moyens de clippage 51.

Il peut être prévu dans la surface du retour 20, un évidement 52 apte à recevoir l'obturateur 50. Ainsi, l'obturateur 50 et le retour 20 forment une surface sensiblement plane, ce qui est à la fois esthétique tout en étant peu encombrant.

D'autre part, le traitement de la surface de l'obturateur 50, qu'il s'agisse de la couleur ou du grain, peut être le même que celui de la surface du retour 20, de manière à donner une finition esthétique au montage de la garniture 14.

Dans le mode réalisation décrit, les moyens de fixation 30 se trouvent à l'arrière du panneau de porte 12. Cependant, selon d'autres modes de réalisation, non décrits ici, les moyens de fixation 30 peuvent se situer à l'avant et/ou à l'arrière du panneau latéral de caisse 12.

Ainsi, la garniture de panneau latéral selon l'invention présente l'avantage d'être fixée par des moyens de fixation sûrs et discrets, et ce, grâce à des moyens simples et peu onéreux, ne nécessitant pas de modifications du panneau de porte ni de transformations importantes de la garniture.

## Revendications

1. Agencement d'une garniture (14) sur un panneau latéral de caisse (12) de véhicule automobile, dans lequel la garniture (14) présente une paroi (18) sensiblement longitudinale s'étendant en regard du panneau (12) et un retour transversal (20) s'étendant, en direction du panneau (12), sensiblement perpendiculairement au plan dudit panneau (12), **caractérisé en ce que** l'agencement comporte :
- des moyens de fixation internes (30) constitués par une première patte de fixation (32) d'orientation sensiblement perpendiculaire au plan du panneau (12), portée par une face interne (34) de la paroi longitudinale (18) de la garniture (14) et traversée par un premier trou (36), et par une deuxième patte de fixation (38), d'orientation sensiblement perpendiculaire au plan du panneau (12), portée par le panneau (12) et traversée par un deuxième trou (40), portant un fût de vissage (42), les deux pattes (32,38) étant reliées entre elles par une vis (44) coopérant avec les trous (36,40),
- et une zone d'accès (46) aux moyens de fixation internes (30) ménagée, en regard desdits trous (36,40), dans le retour (20) de la garniture (14), et fermée par un obturateur (50).

2. Agencement d'une garniture (14) selon la revendication 1, **caractérisé en ce que** la première patte (32) forme une partie d'un renfort de la garniture (14).

3. Agencement d'une garniture (14) selon l'une quelconque des revendications précédentes, **caractérisé en ce que** la paroi longitudinale (18) de la garniture (14) est formée d'une zone périphérique (22) et d'une partie centrale (24) de support d'un élément d'habillage central (25), un bord (26) de la partie centrale (24) étant relié à la face interne (34) de la zone périphérique (22) et **en ce que** la première patte de fixation (32) est constituée par une extension du bord (26) de la partie centrale (24).

4. Agencement d'une garniture (14) selon l'une quelconque des revendications précédentes, **caractérisé en ce que** la première patte (32) comporte une collerette (48) s'étendant au moins sur une portion inférieure de la périphérie du premier trou (36), en direction du retour (20), de manière à éviter, lors du montage de la garniture (14), une chute de la vis (44) à l'intérieur de ladite garniture (14).

5. Agencement d'une garniture (14) selon l'une quelconque des revendications précédentes, **caractérisé en ce que** l'obturateur (50) coopère avec un évidement (52) ménagé dans le retour (20) de manière que l'obturateur (50) et le retour (20) présentent une surface sensiblement plane.

6. Agencement d'une garniture (14) selon l'une quelconque des revendications précédentes, **caractérisé en ce que** la surface de l'obturateur (50) et celle du retour (20) sont identiques de manière qu'ils présentent un aspect homogène.

7. Agencement d'une garniture (14) selon l'une quelconque des revendications précédentes, **caractérisé en ce que** le panneau latéral de caisse (12) est une porte.

## Claims

1. Arrangement of a lining (14) on a body side panel (12) of a motor vehicle, in which the lining (14) has an approximately longitudinal wall (18) extending opposite the panel (12) and a transverse return (20) extending, in the direction of the panel (12), approximately perpendicular to the plane of said panel (12), **characterized in that** the arrangement comprises:
- internal fastening means (30) consisting of a first fastening lug (32) which is oriented approximately perpendicular to the plane of the panel (12), is held on an internal face (34) of the longitudinal wall (18) of the lining (14) and through which a first hole (36) passes, and of a second fastening lug (38) which is oriented approximately perpendicular to the plane of the panel (12), is held on the panel (12) and through which a second hole (40) passes, holding a screwing shank (42), the two lugs (32, 38) being connected together by a screw (44) engaging in the holes (36, 40),
- and a region (46) for accessing the internal fastening means (30), said region (46) being formed, opposite said holes (36, 40), in the return (20) of the lining (14) and being closed off by a blanking piece (50).

2. Arrangement of a lining (14) according to Claim 1, **characterized in that** the first lug (32) forms part of a reinforcement of the lining (14).

3. Arrangement of a lining (14) according to either of the preceding claims, **characterized in that** the longitudinal wall (18) of the lining (14) is formed by a peripheral region (22) and a central part (24) for supporting a central trim element (25), one edge (26) of the central part (24) being connected to the internal face (34) of the peripheral region (22), and **in that** the first fastening lug (32) consists of an extension of the edge (26) of the central part (24).

4. Arrangement of a lining (14) according to any one of the preceding claims, **characterized in that** the first lug (32) comprises a flange (48) extending at least over a lower portion of the periphery of the first hole (36), towards the return (20), so as to prevent the screw (44) dropping inside the lining (14) during the fitting of said lining (14).

5. Arrangement of a lining (14) according to any one of the preceding claims, **characterized in that** the blanking piece (50) engages with a recess (52) formed in the return (20) such that the blanking piece (50) and the return (20) have an approximately planar surface.

6. Arrangement of a lining (14) according to any one of the preceding claims, **characterized in that** the surface of the blanking piece (50) and that of the return (20) are identical **in that** they have a homogeneous appearance.

7. Arrangement of a lining (14) according to any one of the preceding claims, **characterized in that** the body side panel (12) is a door.

## Patentansprüche

1. Anordnung einer Verkleidung (14) auf einem Karosserie-Seitenblech (12) eines Kraftfahrzeugs, wobei die Verkleidung (14) eine im Wesentlichen längs verlaufende Wand (18), die sich gegenüber dem Blech (12) erstreckt, und einen Querrücksprung (20) aufweist, der sich in Richtung des Blechs (12) im Wesentlichen lotrecht zur Ebene des Blechs (12) erstreckt, **dadurch gekennzeichnet, dass** die Anordnung aufweist:
- innere Befestigungseinrichtungen (30), die von einer ersten Befestigungslasche (32) mit einer zur Ebene des Blechs (12) im Wesentlichen lotrechten Ausrichtung, die von einer Innenseite (34) der Längswand (18) der Verkleidung (14) getragen und von einem ersten Loch (36) durchquert wird, und von einer zweiten Befestigungslasche (38) mit einer zur Ebene des Blechs (12) im Wesentlichen lotrechten Ausrichtung gebildet werden, die von dem Blech (12) getragen und von einem zweiten Loch (40) durchquert wird, die einen Schraubschaft (42) tragen, wobei die zwei Laschen (32, 38) durch eine Schraube (44) miteinander verbunden werden, die mit den Löchern (36, 40) zusammenwirkt,
- und eine Zugangszone (46) zu den inneren Befestigungseinrichtungen (30), die gegenüber den Löchern (36, 40) im Rücksprung (20) der Verkleidung (14) eingerichtet ist und von einer Verschlussvorrichtung (50) verschlossen wird.

2. Anordnung einer Verkleidung (14) nach Anspruch 1, **dadurch gekennzeichnet, dass** die erste Lasche (32) einen Teil einer Verstärkung der Verkleidung (14) bildet.

3. Anordnung einer Verkleidung (14) nach einem der vorhergehenden Ansprüche, **dadurch gekennzeichnet, dass** die Längswand (18) der Verkleidung (14) von einer Umfangszone (22) und von einem zentralen Stützbereich (24) eines zentralen Abdeckungselements (25) gebildet wird, wobei ein Rand (26) des zentralen Bereichs (24) mit der Innenseite (34) der Umfangszone (22) verbunden ist, und dass die erste Befestigungslasche (32) aus einer Verlängerung des Rands (26) des zentralen Bereichs (24) besteht.

4. Anordnung einer Verkleidung (14) nach einem der vorhergehenden Ansprüche, **dadurch gekennzeichnet, dass** die erste Lasche (32) einen Kragen (48) aufweist, der sich über mindestens einen unteren Abschnitt des Umfangs des ersten Lochs (36) in Richtung des Rücksprungs (20) erstreckt, um bei der Montage der Verkleidung (14) ein Fallen der Schraube (44) ins Innere der Verkleidung (14) zu vermeiden.

5. Anordnung einer Verkleidung (14) nach einem der vorhergehenden Ansprüche, **dadurch gekennzeichnet, dass** die Verschlussvorrichtung (50) mit einer Aussparung (52) im Rücksprung (20) zusammenwirkt, damit die Verschlussvorrichtung (50) und der Rücksprung (20) eine im Wesentlichen ebene Fläche haben.

6. Anordnung einer Verkleidung (14) nach einem der vorhergehenden Ansprüche, **dadurch gekennzeichnet, dass** die Fläche der Verschlussvorrichtung (50) und diejenige des Rücksprungs (20) gleich sind, so dass sie ein homogenes Aussehen haben.

7. Anordnung einer Verkleidung (14) nach einem der vorhergehenden Ansprüche, **dadurch gekennzeichnet, dass** das Karosserie-Seitenblech (12) eine Tür ist.
